# EUROPEAN PATENT APPLICATION

(11) **EP 4 667 230 A1**
(43) Date of publication of application: **24.12.2025**
(21) Application number: 24183136.1
(22) Date of filing: 19.06.2024
(51) Int. Cl.: B41J 2/44, B41J 25/304, B41M 5/00, C09D 11/00

(54) **DISTANCE LASER PRINTING**

(71) Applicant: HELIOSONIC GmbH, 46483 Wesel (DE)
(72) Inventor: The designation of the inventor has not yet been filed
(74) Representative: Kleine, Hubertus

(57) **Abstract**

The invention relates to a process for printing a substrate by using an ink printing assembly with a movable print head comprising an ink carrier having an ink layer,
the ink layer being irradiated regionally in such a way that heat bulges are formed in the ink layer which cause the splitting of ink droplets so that the ink printing assembly is working as nozzleless droplet ejector for ejecting droplets of ink from the ink layer,
the distance between the print head and the substrate is adjusted by moving the print head relative to the substrate, where the print distance between the irradiated ink layer region and the corresponding printed substrate region is temporarily or permanently at least 1100 µm,
where the ink layer comprises absorbing particles and dissolved polymer having a weight average (Mw) molecular weight of at least 250 000 g/mol, where the weight average (Mw) of the molecular weight of the dissolved polymer is determined according to DIN 55672-2: 2016-3.

## Description

The present invention relates to a printing process.

It is often desired to paint or to print on curved surfaces of objects (e. g. on curved automotive surfaces) and/ or on coarsely structured surface areas of substrates.

In case special printing machines are not available simple spray painting in which the substrate is masked off might provide sufficient results. For this purpose masking tapes for spray painting are used. Where curved edges and three-dimensional surfaces need to be masked, special fineline tapes with a very level of high conformability might be used.

However, often it is difficult to provide such masking tapes which offer good adhesion on relevant substrates on the one hand which can be removed afterwards without leaving any adhesive residues on the other hand. Furthermore, masking of the substrate, e.g. providing the frame of letters on an automotive part, is time consuming and cannot be deemed as to be time efficient. An additional drawback of this method is the non-optimal degree of application efficiency, so that part of the sprayed paint, known as overspray, does not land on the substrate part to be painted but on the masking material.

Thus, often complex printing apparatuses for ink jet printing on curved surfaces of objects are used in order to increase the efficiency. Such apparatuses typically comprise an inkjet printhead having a plurality of nozzles, and there are also such being operative to effect relative movement of the nozzles and the substrate.

US 10,150,304 B proposes such a machine type for painting vehicle parts with a paint. Said machine type comprises an application device that applies the coating agent, wherein the application device includes a print head that discharges the coating agent from a plurality of coating agent nozzles included on the print head.

However this complicated machine is not optimal concerning the flexibility of use and efficiency because coating nozzles are needed. The use of coating nozzles generally mean limitations concerning the rheology and the ingredients of the used paint. Generally, it is difficult to print paints of high viscosity or bigger particle containing paints through nozzles. Furthermore, ink nozzles easily become blocked and in case of the change of the ink the nozzles have to be cleaned. This further limits the universal and practical use of such a machine.

Printing processes which avoid the use of such ink nozzles, e. g. described in US 11,458,755, are generally not considered suitable for quality printing on curved surfaces or coarsely structured substrates. However, WO 2022/002534 concerns the printing of curved surfaces, in which a printing machine is used that has a nozzle-free, three-dimensionally movable print head. On the one hand, such a printing machine is quite complex to purchase due to the forced three-dimensional movability of the print head (economical effort), and on the other hand, the regular three-dimensional alignment is quite time-consuming, which delays the printing process in terms of speed.

The problem addressed by the present invention is therefore that of providing a method suitable for printing on curved surfaces of objects and/ or on coarsely structured surface areas of substrates. The corresponding printing process should be one the one hand economical especially in terms of the printing speed and should allow on the other hand a sufficient printing quality.

The solution to this problem is a process for printing a substrate by using an ink printing assembly with a movable print head comprising an ink carrier having an ink layer,
the ink layer being irradiated regionally in such a way that heat bulges are formed in the ink layer which cause the splitting of ink droplets so that the ink printing assembly is working as nozzleless droplet ejector for ejecting droplets of ink from the ink layer,
the distance between the print head and the substrate is adjusted by moving the print head relative to the substrate, where the print distance between the irradiated ink layer region and the corresponding printed substrate region is temporarily or permanently at least 1100 µm,
where the ink layer comprises absorbing particles and dissolved polymer having a weight average (Mw) molecular weight of at least 250 000 g/mol, where the weight average (Mw) of the molecular weight of the dissolved polymer is determined according to DIN 55672-2:2016-3.

The dissolved polymer having a weight average (Mw) molecular weight of at least 250 000 g/mol (where the weight average (Mw) of the molecular weight of the dissolved polymer is determined according to DIN 55672-2:2016-3) includes all polymer dissolved in the ink (layer).

Nozzle-less droplet ejection means that no ink nozzles are used according to the relevant printing mechanism.

The printing process according to the present invention allows to paint or to print with sufficient sharp edges on curved surfaces of objects or on structured surface areas

It is not necessary that the relevant substrates are masked off before printing so that the efficiency is increased.

Additional advantage is caused because the printing process according to the present invention avoids the use of printing nozzles. Working nozzleless means to increase the flexibility and the universality of the printing process because e.g. it is possible to print also paints of high viscosity or bigger particle containing paints. Relevant nozzleless printing makes it also easier to change to color of the printed ink.

Additionally, it should be said that formation of satellites around the transferred drop of ink can be avoided sufficiently.

Because in the process no nozzles were used, there is no resolution limitation caused by nozzles. Thus, inks with high viscosity and large particles can be printed with high print resolution.

The relevant printing quality is also characterized by a low "satellite generating rate" (splashes outside the printed image): The satellite generating rate is determined via microscopical satellite counting (counting number of splashes).

It should be pointed out that the printing process according to the present invention allows printing with sufficient sharp edges on curved substrates or on structured surface areas even if no three dimensional movable print head is used.

Preferably, the distance between the print head and the substrate is adjusted by providing the print head with exactly two degrees of freedom in translation, allowing horizontal (Tx), and vertical (Tg) translations.

The larger printing distance provided according to the invention ultimately makes it possible to use such a print head that can "only" be moved in two dimensions while maintaining fairly good print quality. This is particularly worth emphasizing because one generally does not expect print results of good quality at such print distances (in a lift printing process).

Alternatively, it is also possible that the distance between the print head and the substrate is adjusted by providing the print head with three degrees of freedom in translation, allowing horizontal (Tx), vertical (Tg) and in depth (Tz) translations. However, the use of such a three dimensional movable print head might be economically not so attractive, especially regarding the corresponding printing speed.

Typically, the ink layer is heated by means of a laser which regionally heats the ink layer, preferably line by line, through the ink carrier, as a result of which the ink, particularly by virtue of vaporizing constituents, is heated and forms a bulge.

According to a preferred embodiment, the ink layer is irradiated by means of a laser, more particularly by means of a switched laser.

The laser used may in particular be a switched laser. According to one embodiment, the laser generates a grid of dots which forms the printed image. According to another embodiment, the laser runs in lines. Combinations of dots and lines are likewise conceivable.

Summarizing, the ink layer is normally irradiated by means of a laser, more particularly by means of a switched laser.

The ink layer is heated in such a way that the ink particles which form are split off and thrown in the direction of the substrate.

The ink splitting is the process of ink transfer, particularly that in which a drop of ink goes onto the substrate, where it attaches permanently and forms a printed dot or a printed line.

The attachment preferably takes place predominantly, more preferably exclusively, by forces of adhesion between the substrate and the drop of ink that forms.

Also conceivable, however, at least in a supporting function, is to utilize magnetic or electrostatic forces so that the bulge attaches on the substrate and so forms a drop which goes over onto the substrate.

Generally, the ink carrier and ink layer are moved parallel to one another (typically the ink layer lies on a circulating ink ribbon).

Normally, substrate and ink carrier are moved relative to one another at a speed which typically corresponds to about the half of the printing speed.

The printing speed should be defined as to be the number of the scanned printing lines per second, multiplied with the printed line width.

This allows a clean printed image and a high resolution to be achieved.

A switched laser used is normally designed as a laser working with a single light wavelength but providing variability concerning light intensity and switching frequency.

The ink layer can be formed by coating an ink ribbon with an ink. This may be configured in particular with a circulating ribbon which in order to produce an ink layer is guided through an inking unit, more particularly a nip inking unit.

Said ink layer being in contact with the ink carrier might be (stepless) generated with a variable thickness so that the current amount of the ejected ink is adjustable. The thickness of the ink layer (on the ink ribbon) should be normally > 30 µm.

Typically, the current amount of the ejected ink is (stepless) adjustable by variation of the intensity of the irradiation, more particularly by the variation of the laser power.

With the process of the invention it is possible to apply ink layers 1 to 100 µm, preferably 10 to 50 µm, thick to the substrate.

Often, the print distance between the irradiated ink layer region and the corresponding printed substrate region is temporarily or permanently at least 1300 µm.

Preferably, the print distance between the irradiated ink layer region and the corresponding printed substrate region is temporarily or permanently at least 1 100 - 10 000 µm, preferably 1100 - 4 000 µm. Greater print distances would normally deteriorate the print quality. Smaller print distances often make it difficult to print on three-dimensional surfaces.

According to one embodiment, the print distance between the irradiated ink layer region and the corresponding printed substrate region is permanently at least 1100 µm.

In many cases the print distance between the irradiated ink layer region and the corresponding printed substrate region is at least temporarily at least 1500 µm.

Typically, the substrate contains curved surface sections and/ or structured surface areas, preferably with a profile of 0.1 - 5 mm.

Preferably, the dissolved polymer has a weight average (Mw) molecular weight of 250 000 g/mol to 6 000 000 g/mol, more preferably 400 000 g/mol to 3 000 000 g/mol.

Preferably, the concentration of the dissolved polymer in the ink is between 0.05 to 2.00 wt.%, more preferably 0.10 - 1.00 wt. %.

Typically, at least 50 wt.% of the dissolved polymer is provided by a cellulose ester, a cellulose nitrate, a cellulose ether, more particularly a hydroxypropyl cellulose, a polyurethane, a vinyl polymer and/ or a meth acrylate, more particularly a methyl meth acrylate.

Hydroxypropylcellulose in particular, in other words a cellulose ether in which some of the hydroxyl groups are linked as ethers with hydroxypropyl groups, appears particularly suitable for the effect of the invention. However, also other types of soluble polymers might be used, like polyether (e.g. polyethylene glycols), poly(meth)acrylates (e.g. polyacrylic acid or methyl meth acrylate) or even also natural polymers (e.g. such on the basis of alginates). It should be taken into consideration that an appropriate solvent or solvent mixture has to be chosen in which the relevant polymer is soluble. Typically, (polar) organic solvents might be used (also such being on the basis of monomers, like polymerizable vinylic monomers). However, also water might be an advantageous solvent for special applications. Generally, the liquid contains or consists of water and/ or organic solvents. Often, the ink layer contains 5-99 wt.%, preferably 15 - 95 wt.% of a liquid in which the dissolved polymer is dissolved and the absorbing particles are dispersed and/or dissolved.

Preferably, the absorbing particles are provided by carbon black, metal particles and/ or carbon particles X present as carbon nanotube particles, graphite particles and/or structural analogue particles of graphite selected from the group consisting of graphene particles, graphene oxide particles, graphite oxide particles, fullerene particles and particles of graphite intercalation compounds.

According to one preferred embodiment, the ink layer contains 0.02 - 0.90 wt.%, preferably 0.02 - 0.40 wt.% of carbon particles X, present as carbon nanotube particles, graphite particles and/or structural analogue particles of graphite selected from the group consisting of graphene particles, graphene oxide particles, graphite oxide particles, fullerene particles and particles of graphite intercalation compounds.

The use of such absorption particles X (non-amorphous carbon particles) ensure that a high absorption performance can still be achieved without causing any significant clouding of the ink: such a high degree of absorption efficiency generally means not only energy efficiency, but also has a direct effect on an attractive appearance of the printed result. This is particularly relevant in connection with chromatic printing, light printing, transparent printing and glossy printing, since undesirable haze can be avoided.

It is an economic advantage that only small dosages of said absorption particles were needed for the lift of the printing ink.

This is in contrast to known - lift technology used - absorption particles, such as carbon black or metallic particles which are also not substantially neutral for the coloured impression conveyed by the ink layer.

The above mentioned special small quantity of carbon containing particles X dispersed or dissolved in the liquid guarantees on the one hand a sufficient (laser) absorption but on the other hand avoids undesirable haze. Furthermore, corresponding higher wt.% values than about 0.4 wt.% often cause undesired high viscosities of the ink (the thickening effect should be limited in order to maintain a good printability). It is also possible to use corresponding mixtures of particle X types; e. g. a mixture of carbon nanotube particles, graphite particles and graphene particles.

Generally, it is advantageous (also energy efficient) to reduce the used laser power (if possible).

According to a preferred embodiment the ink layer contains less than 0.4 wt.% carbon black, preferably no carbon black.

Below the invention is described in more detail by examples.

### Performed (Lift) printing process:

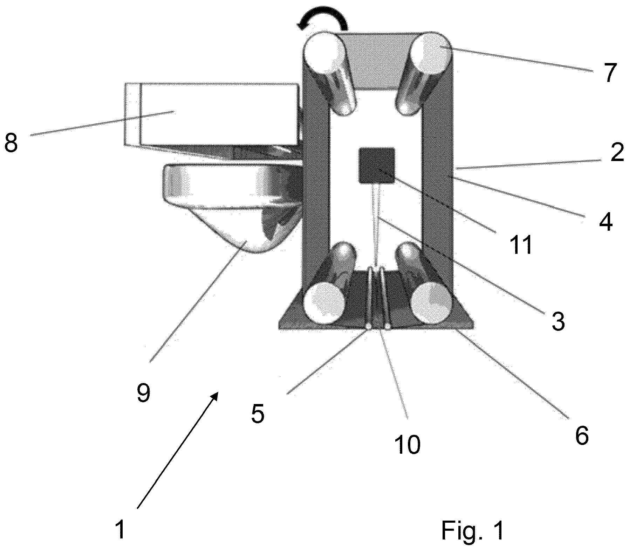

A printing apparatus, according to Fig. 1 was used.

Fig. 1 is a schematic view of one exemplary embodiment of a printing machine (1) which might be used to perform the process according to the invention.

The printing machine (printing apparatus) (1) comprises as ink carrier (4) a circulating ink ribbon.

The ink ribbon is coated homogeneously and over its full area with ink (2) by the inking unit (8). The ink ribbon subsequently moves in the arrow direction to the printing nip (10). The ink carrier (4) is distanced by a gap from the substrate (6) to be printed. Preferably the width of the gap is adjustable and/or is regulated continuously. This can be done by means, for example, of adaptable distancing rolls (5).

In the printing nip (10), using a laser scanner (11), a laser beam (3) is focused through the ink carrier (4), which is permeable to the laser light, into the ink (2). The local and targeted heating of parts of the ink (2) by means of the laser beam (3) causes explosive vaporization of a small region of the ink (2), and so a part of the printing ink (2) is transferred from the ink ribbon onto the opposite substrate (6).

The ink ribbon, controlled by the distancing rolls (5) and the deflection rollers (7), subsequently moves back in the direction of the inking unit (8). On contact between inking unit (8) and the ink ribbon, the ink (2) consumed is replenished.

The excess ink (2) in the inking unit (8) is collected in the ink trough (9) at the bottom and is added continuously in repetition to the printing operation.

### List of reference numerals relating to Fig. 1

1. Printing machine (printing apparatus)
2. ink
3. Laser beam
4. ink carrier
5. Distancing roll
6. Substrate
7. Deflection roller
8. Inking unit
9. ink trough
10. Printing nip
11. Laser scanner

A lift printing apparatus/ lift printing process as described above forms the basis for the experiments below:
Printing tests with different additives (PMMA 036/MW1.6 million; PMMA 034/MW 30,000) and distances from print head to substrate were performed. Graphene was used as the absorption pigment. For this purpose, two different PMMA types with different molecular weights were used.

These different inks (with used polymers poly methy methacrylate and cellulose ether each completely dissolved) were then printed with different printhead/substrate distances and the quality/ precision of the print results were evaluated/ compared.

| **Compositions A1); A2)** | **[wt.-%]** |
|---|---|
| Polyester-Tetraacrylate (a liquid) | 60.0 |
| Hexandiol Diacrylate (a liquid) | 33.4 |
| Poly(methyl methacrylate) | 0.2 |
| Dispersing agent | 0.2 |
| Photoinitiator (of the type 1) | 6.0 |
| Graphene (particles) | 0.2 |

| **Compositions B1); B2)** | **[wt.-%]** |
|---|---|
| Polyvinylbutyral (PVB) - (MOWITAL B 20 H) | 6.0 |
| 3-methoxy-3-methyl-butanol (MMB) | 93.4 |
| Cellulose ether | 0.2 |
| Dispersing agent | 0.2 |
| Graphene (particles) | 0.2 |

### Series of experiments with PMMA (poly methyl methacrylate):

### A1) PMMA/MW 1.6 million g/mol:

| **Printing distance precision** | **splashes** | **printing** |
|---|---|---|
| 0.3 mm | no | high |
| 1.5 mm | low | still high |
| 2.5 mm | moderate | medium |

### A2) PMMA/MW 30 000 g/mol

| **Printing distance precision** | **splashes** | **printing** |
|---|---|---|
| 0.3 mm | low | still high |
| 1.5 mm | strong | medium |
| 2.5 mm | very strong | small |

### Series of experiments with cellulose ether:

### B1) Cellulose ether /MW 1.15 million g/mol

| **Printing distance precision** | **splashes** | **printing** |
|---|---|---|
| 0.3 mm | no | high |
| 1.5 mm | low | still high |
| 2.5 mm | moderate | medium |

### B2) Cellulose ether /MW 40 000 g/mol

| **Printing distance precision** | **splashes** | **printing** |
|---|---|---|
| 0.3 mm | low | high |
| 1.5 mm | strong | medium |
| 2.5 mm | very strong | small |

The experiments above show that quite good (at least usable) print quality can also be maintained when printing with print distances greater than 1100 µm, but only if dissolved polymer with a sufficiently high molecular weight is used. Furthermore, it is shown that on the one hand polar polymer types (cellulose ether) but on the other hand also non-polar polymer types (methyl meth acrylate) might provide good results.

In all experiments (only) 0.2 wt.% graphene particles were used as absorption particles.

Graphene as an absorption pigment (however, non-amorphous carbon particles in general) has the decisive advantage that, despite its low concentration (about 0.2 wt.%), it is on the one hand very absorbently active and on the other hand it is only slightly visible in visible light, so it often does not interfere with visual effects.

The turbidity of all of the above inks is very low (disturbing effects in the functional area are minimal or non-existent).

## Claims

1. Process for printing a substrate by using an ink printing assembly with a movable print head comprising an ink carrier having an ink layer,
the ink layer being irradiated regionally in such a way that heat bulges are formed in the ink layer which cause the splitting of ink droplets so that the ink printing assembly is working as nozzleless droplet ejector for ejecting droplets of ink from the ink layer,
the distance between the print head and the substrate is adjusted by moving the print head relative to the substrate, where the print distance between the irradiated ink layer region and the corresponding printed substrate region is temporarily or permanently at least 1100 µm,
where the ink layer comprises absorbing particles and dissolved polymer having a weight average (Mw) molecular weight of at least 250 000 g/mol, where the weight average (Mw) of the molecular weight of the dissolved polymer is determined according to DIN 55672-2:2016-3.

2. Printing process according to claim 1, **characterized in that** the ink layer is irradiated by means of a laser, more particularly by means of a switched laser.

3. Printing process according to claim 1 or claim 2, **characterized in that** ink carrier and ink layer are moved parallel to one another.

4. Printing process according to one of the claims 1 - 3, wherein the distance between the print head and the substrate is adjusted by providing the print head with exactly two degrees of freedom in translation, allowing horizontal (Tx), and vertical (Tg) translations.

5. Printing process according to one of the claims 1 - 3, wherein the distance between the print head and the substrate is adjusted by providing the print head with three degrees of freedom in translation, allowing horizontal (Tx), vertical (Tg) and in depth (Tz) translations.

6. Printing process according to one of the claims 1 - 5, where the print distance between the irradiated ink layer region and the corresponding printed substrate region is temporarily or permanently at least 1300 µm.

7. Printing process according to one of the claims 1 - 6, where the print distance between the irradiated ink layer region and the corresponding printed substrate region is temporarily or permanently at least 1100 -10 000 µm, preferably 1100 - 4000 µm.

8. Printing process according to one of the claims 1 - 7, where the print distance between the irradiated ink layer region and the corresponding printed substrate region is permanently at least 1100 µm.

9. Printing process according to one of the claims 1 - 8, where the print distance between the irradiated ink layer region and the corresponding printed substrate region is at least temporarily at least 1500 µm.

10. Printing process according to one of the claims 1 - 9, where the substrate contains curved surface sections and/ or structured surface areas.

11. Printing process according to one of the claims 1 - 10, wherein the ink layer being in contact with the ink carrier is generated with a variable thickness so that the current amount of the ejected ink is adjustable.

12. Printing process according to one of the claims 1 - 11, wherein the current amount of the ejected ink is adjustable by variation of the intensity of the irradiation, more particularly by the variation of the laser power.

13. Printing process according to one of the claims 1 - 12, where the dissolved polymer has a weight average (Mw) molecular weight of 250 000 g/mol to 6 000 000 g/mol, preferably 400 000 g/mol to 3 000 000 g/mol.

14. Printing process according to one of the claims 1 - 13, where the concentration of the dissolved polymer in the ink is between 0.05 to 2.00 wt.%.

15. Printing process according to one of the claims 1 - 14, where at least 50 wt.% of the dissolved polymer is provided by a cellulose ester, a cellulose nitrate, a cellulose ether, more particularly a hydroxypropyl cellulose, a polyurethane, a vinyl polymer and/ or a meth acrylate, more particularly a methyl meth acrylate.

16. Printing process according to one of the claims 1 - 15, **characterized in that** the absorbing particles are provided by carbon black, metal particles and/ or carbon particles X present as carbon nanotube particles, graphite particles and/or structural analogue particles of graphite selected from the group consisting of graphene particles, graphene oxide particles, graphite oxide particles, fullerene particles and particles of graphite intercalation compounds.

17. Printing process according to one of the claims 1 - 16, wherein the ink layer contains 0.02 - 0.90 wt.%, preferably 0.02 - 0.40 wt.% of carbon particles X, present as carbon nanotube particles, graphite particles and/or structural analogue particles of graphite selected from the group consisting of graphene particles, graphene oxide particles, graphite oxide particles, fullerene particles and particles of graphite intercalation compounds.

18. Printing process according to one of the claims 1 - 17, wherein the ink layer contains 5-99 wt.%, preferably 15 - 95 wt.% of a liquid in which the dissolved polymer is dissolved and the absorbing particles are dispersed and/or dissolved.

19. Printing process according to claim 18, wherein the liquid contains or consists of water and/ or organic solvents.
